# EUROPÄISCHE PATENTSCHRIFT

(11) **EP 2 962 142 B1**
(45) Veröffentlichungstag und Bekanntmachung des Hinweises auf die Patenterteilung: **22.04.2020**
(21) Anmeldenummer: 14707637.6
(22) Anmeldetag: 12.02.2014
(51) Int. Cl.: G02B 6/38

(54) **OPTISCHES MODUL FÜR MODULAR AUFGEBAUTE INDUSTRIESTECKVERBINDER**
OPTICAL MODULE FOR MODULARLY DESIGNED INDUSTRIAL PLUG-IN CONNECTORS
MODULE OPTIQUE DESTINÉ À UN CONNECTEUR À FICHES INDUSTRIEL PRÉSENTANT UNE STRUCTURE MODULAIRE

(30) Priorität: 01.03.2013 DE 102013102023
(43) Veröffentlichungstag der Anmeldung: 06.01.2016
(73) Patentinhaber: Harting Electric GmbH & Co. KG, 32339 Espelkamp (DE)
(72) Erfinder: DRESCHER, Jan, 31552 Apelern (DE); LEHNA, Houssaine, 32339 Espelkamp (DE)
(86) Internationale Anmeldenummer: PCT/DE2014/100054
(87) Internationale Veröffentlichungsnummer: WO 2014/131397

(56) Entgegenhaltungen:
- EP-A1- 2 251 725
- WO-A1-2007/009676
- US-A1- 2004 052 472
- US-A1- 2007 292 096
- US-A1- 2010 316 337
- US-A1- 2013 044 978

## Beschreibung

Die Erfindung betrifft einen Industriesteckverbinder nach der Gattung des unabhängigen Anspruchs 1.

Aus dem Stand der Technik sind auch weitere Module bekannt, die beispielsweise elektrische Kontaktelemente oder pneumatische Kontakte umfassen. Mit derartigen Modulen werden Gehäuse von Industriesteckverbindern bestückt. Dadurch können verschiedene Variationen von Industriesteckverbindern erzeugt werden. Die Industriesteckverbinder sind dem Fachmann auch als Han-Steckverbinder bekannt, die von der Firma HARTING vertrieben werden.

### Stand der Technik

Die DE 10 2010 051 816 A1 zeigt eine Patrone in welche ein LWL-Steckverbinder irreversibel fixiert ist. Die Patrone wird in ein Gehäuse eines Steckverbinders gepresst.

Auch in der WO 2007 119 036 A1 wird einen LWL-Steckverbinder gezeigt, dessen Ferrule 32 im Gehäusekörper irreversibel verklebt ist.

Die EP 2 251 725 A1 zeigt ein Modul welches in ein Gehäuse eines Steckverbinders fixierbar ist. Das Modul weist zumindest einen LWL-Steckverbinder auf, der über einen Adapter im Modul reversibel verrastet ist.

Die EP 1 792 217 A1 zeigt einen SC-Steckverbinder, der ein spezielles Gehäuse aufweist, wodurch der Steckverbinder eine gute, so genannte, Feldkonfektionierbarkeit aufweist. Hier ist der Lichtwellenleiter in einer so genannten Ferrule eingefasst. Bei der Kopplung zweier Steckverbinder werden die jeweiligen Stirnseiten der Lichtwellenleiter (LWL) gegeneinander gedrückt. Über diese Schnittstelle werden die Lichtwellensignale übertragen. Einen derartigen Steckverbinder nennt man auch kurz LWL-Steckverbinder.

Die WO 2007/009676 A1 zeigt eine Steckverbinderanordnung, die es ermöglicht optischen Fasern mit einem geringen Durchmesser von wenigen Mikrometern eine ausreichende Signalausbeute zu erzielen.

Die US 2013/044978 A1 zeigt einen LWL-Steckverbinder mit einem in einem ersten Gehäuse eingebetteten LWL-Steckverbinder. Zum Verbinden mit einem Gegensteckverbinder wird der LWL-Steckverbinder mit einem weiteren Gehäuse versehen. Die Steckverbindung wird über einen Adapter realisiert.

Die Kopplung des vorgenannten LWL-Steckverbinders muss sehr präzise erfolgen. Die Stirnseiten der Lichtwellenleiter müssen sehr präzise zueinander ausgerichtet sein. Das bedeutet, dass ein Großteil (>95%) der Stirnflächen sich überlappen muss, damit eine gute Signalübertragung erfolgen kann. Außerdem dürfen die Stirnflächen nicht zueinander gekippt sein.

Wenn man mehrere der oben erwähnten LWL-Steckverbinder parallel koppeln möchte, muss man auf die präzise Ausrichtung jeder einzelnen LWL-Steckverbinderkopplung achten.

### Aufgabenstellung

Die Aufgabe der Erfindung besteht darin einen Industriesteckverbinder mit einem Modul, welches LWL-Steckverbinder aufweist, vorzuschlagen, welcher unempfindlich gegenüber Umwelteinflüssen wie Verschmutzung, Staub, Erschütterung oder Vibrationen ist.

Die Aufgabe wird durch den Gegenstand des Anspruchs 1 gelöst.

Eine vorteilhafte Ausgestaltung der Erfindung ist in dem Unteranspruch angegeben.

Das Modul mit LWL-Steckverbindern wird in ein Gehäuse eines Industriesteckverbinders eingesetzt. Die Module werden über einen so genannten Halterahmen in das Steckverbindergehäuse eingebracht. In der EP 2 537 212 A1 ist ein Steckverbindergehäuse offenbart, dass mehrere Rastplätze für Module aufweist. Die EP 0 860 906 B1 zeigt beispielsweise einen Halterahmen, über den die Module in das Steckverbindergehäuse eingebracht werden können.

In dem vorgeschlagenem Modul ist ein LWL-Steckverbinder verrastet. Die Verrastung ist reversibel, so dass der LWL-Steckverbinder erneuert oder gegen einen anderen Stecker ausgetauscht werden kann.

In dem Modul ist außerdem ein Adapter verrastet, der mit dem LWL-Steckverbinder verbunden beziehungsweise darauf aufgesetzt ist. Die Verrastung des Adapters ist ebenfalls reversibel.

Der LWL-Steckverbinder und der Adapter stehen in Wirkverbindung. Damit ist gemeint, dass das aus dem LWL-Steckverbinder austretende Lichtsignal letztendlich über den Adapter ausgekoppelt wird und/oder dass das im Adapter eingehende Lichtsignal in den LWL-Steckverbinder eingekoppelt wird. Der Begriff Lichtsignal wird umgangssprachlich häufig benutzt. Unter Lichtsignal versteht der Fachmann ein optisches Signal.

Besonders vorteilhaft ist es, wenn das Modul Fixiermittel aufweist, mit denen das Modul direkt in das Gehäuse des Industriesteckverbinderders fixierbar ist und/oder dass das Modul durch die Fixiermittel in einem Halterahmen fixierbar ist, wobei der Halterahmen wiederum im Gehäuse des Industriesteckverbinderders fixierbar ist. Die Fixierung ist reversibel ausgestaltet. Dadurch können einzelnen Module aus dem Steckverbindergehäuse entfernt und durch andere ersetzt werden.

Das hier vorgeschlagene Modul ist unempfindlich gegenüber Umwelteinflüssen wie Verschmutzung, Staub. Die Signalübertragung ist außerdem bei Erschütterung oder Vibrationen gewährleistet.

Der Adapter umfasst steckseitig ein optisch abbildendes Element, welches eine strahlaufweitende Wirkung auf ein einfallendes Lichtsignal ausübt.

Bei dem optisch abbildenden Element handelt es sich vorzugsweise um eine Stablinse, besonders bevorzugt jedoch um eine Kugellinse. Letztere hat sich als besonders unempfindlich in rauen, schmutzigen Umgebungen erwiesen.

Die Kugellinse ist so positioniert, dass der aus dem Lichtwellenleiter (beispielsweise ein Glasfaserkabel) austretende Lichtstrahl um ein Vielfaches seiner Ursprungsgröße aufgeweitet und parallelisiert wird.

Wenn ein Industriesteckverbinder mit einem zweiten Industriesteckverbinder zusammengesteckt ist, wobei beide Industriesteckverbinder das erfindungsgemäße optische Modul enthalten, sind im gesteckten Zustand die optischen Elemente, beispielsweise die oben vorgeschlagenen Kugellinsen, zweier Module derart zueinander ausgerichtet, dass das aus dem optischen Element des Moduls des ersten Industriesteckverbinders austretende Lichtsignal in das optische Element des Moduls des zweiten Industriesteckverbinders einkoppelt.

Trifft aus einem Adapter parallelisiertes Licht (Lichtsignal) auf die Kugellinse des gegenüberliegenden Adapters, wird das auftreffende Lichtsignal auf den Lichtwellenleiter des LWL-Steckvernbinders fokussiert.

Über die optischen Elemente der Adapter der Module können leichte Abweichungen bei der Positionierung der Module zueinander ausgeglichen werden. Dies ist bei einem oben beschriebenen modularen Steckverbinder besonders notwendig, da hier in der Regel größere Toleranzen ausgeglichen werden müssen als bei üblichen optischen Steckverbindern. Gerade das Modularsystem der EP 0 860 906 B1 erfordert Module mit einem gewissen Toleranzausgleich. Auch das Modulsystem mit einem im Steckverbindergehäuse integriertem Rahmen, wie in der EP 2 537 212 A1 zu sehen, hat diese Toleranzprobleme. Diese Probleme werden durch das hier vorgeschlagene Modul überwunden.

Die oben beschriebene Signalübertragung funktioniert berührungslos, ohne physikalischen Kontakt, über eine so genannte Luftschnittstelle. Auch wenn die Kugellinsen leicht zueinander parallel (radial) verschoben sind, ist eine ausreichende Lichtstärke zur Signalübertragung aufgrund der Aufweitung des Lichtsignals gewährleistet. Auch wenn die Adapter leicht zueinander axial gekippt sind, ist eine ausreichende Signalübertragung vorhanden.

Es ist vorteilhaft das Modul so auszugestalten, dass gleichermaßen FC- oder LC- oder ST- oder SC-Steckverbinder fixiert werden können. Vorteilhafterweise können in das Modul zumindest zwei unterschiedliche LWL-Steckverbinder, beispielsweise ein ST- und SC-Steckverbinder, fixiert werden. Dadurch wird das Modul vielseitig einsetzbar.

Besonders vorteilhaft ist es, wenn das Modul eine Kupplung umfasst, die die Kugellinsen zweier gegenüberliegender Adapter unterschiedlicher Module zueinander positioniert. Dabei kann es sich beispielsweise um ein zylinderförmiges Element handeln, welches die Kugellinsenbereiche der jeweiligen Adapter überdeckt. Diese Kupplung kann direkt am Modul angeformt sein.

### Ausführungsbeispiel

Ein Ausführungsbeispiel der Erfindung ist in den Zeichnungen dargestellt und wird im Folgenden näher erläutert. Die Erfindung ist nicht auf das hier gezeigte Ausführungsbeispiel beschränkt.

Es zeigen:
- Fig. 1: eine schematische Darstellung zweier steckseitig zueinander ausgerichteter Module,
- Fig. 2: eine Draufsicht auf einen LWL-Steckverbinder,
- Fig. 3: eine perspektivische, teilweise geschnittene Ansicht eines Adapters,
- Fig. 4: eine Seitenansicht eines detailliert gezeigten Moduls,
- Fig. 5: eine Schnittdarstellung des Moduls und
- Fig. 6: perspektivische Ansicht zweier Halterahmen mit gesteckten optischen Modulen.

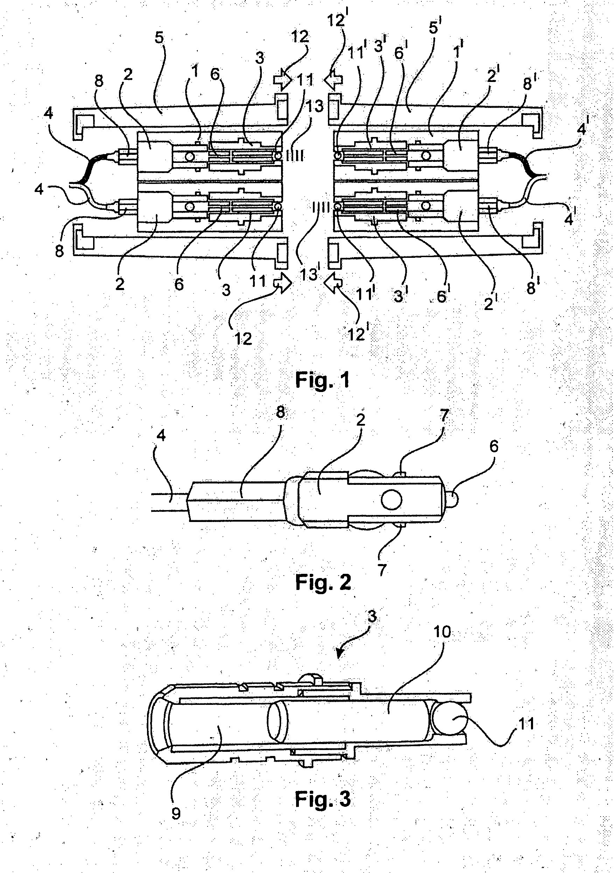

In Figur 1 werden neben ungestrichenen auch gestrichene Bezugszeichen verwendet. Die ungestrichenen Bezugszeichen beziehen sich auf einen Steckverbinder und die gestrichenen Bezugszeichen auf den dazu passenden Gegensteckverbinder. Die gestrichenen Bezugszeichen erfassen jedoch dieselben Merkmale beziehungsweise Bauteile wie die ungestrichenen Bezugszeichen und werden daher in den Ansprüchen nicht gesondert aufgeführt.

Das erfindungsgemäße Modul 1, 1' hat im Wesentlichen die Form eines Quaders. Anschlussseitig ist im Modul 1, 1' ein LWL-Steckverbinder 2, hier ein so genannter SC-Stecker, verrastet. Der SC-Stecker wird standardmäßig für LAN-Verbindungen verwendet und ist daher weit verbreitet.

Steckseitig ragt aus dem SC-Stecker 2 ein Teilstück einer Ferrule 6 heraus, in welcher eine Glasfaser zur Signalübertragung eingebettet ist. Ein Glasfaserkabel 4 ist anschlussseitig am SC-Stecker 2 angeschlossen. Zur reversibel Verrastung im Modul 1, 1' sind am Gehäusekörper des SC-Steckers 2 Rasthaken 7 angeformt, die in geeignete Ausnehmungen des Moduls 1, 1' eingreifen. Zur Zugentlastung wird das Glasfaserkabel 4 mit einer Metallhülse 8 am Gehäusekörper des SC-Steckers 2 angecrimpt.

Steckseitig ist im Modul 1, 1' ein Adapter 3 verrastet. Der Adapter 3 ist im Wesentlichen zylinderförmig ausgebildet und weist einen hülsenartigen Bereich 9 auf, der zur Aufnahme des aus dem SC-Stecker 2 herausragenden Teilstücks der Ferrule 6 vorgesehen ist. An dem Bereich 9 schließt sich ein Ferrulenstück 10 an, welches bis zu einer Kugellinse 11 verläuft, die sozusagen das Steckgesicht des Adapters bildet.

Sind LWL-Steckverbinder 2 und Adapter 3 miteinander verbunden, sind die Stirnflächen der Ferrule 6 des LWL-Steckverbinders 2 und des Ferrulenstücks 10 des Adapters 3 zueinander ausgerichtet und stehen vorzugsweise auch in physikalischen Kontakt. Über die Ferrulen 6, 10 sind natürlich auch die darin eingebetteten Glasfasern beziehungsweise Lichtwellenleiter zueinander ausgerichtet.

Steckseitig ist im Adapter 3 eine Kugellinse 11 angeordnet. Die Kugellinse 11 schließt sich direkt dem Ferrulenstück 10 an.

Wie in Figur 1 zu sehen ist, sind die Kugellinsen 11, 11' der gegenüberliegenden Adapter 1, 1' zueinander ausgerichtet, wenn zwei Industriesteckverbinder 5, 5' mit integrierten Modulen 1, 1', beispielsweise über einen Verriegelungsbügel, miteinander verbunden werden. Die Steckrichtung der Industriesteckverbinder 5, 5' wird durch die Pfeile 12, 12' symbolisiert.

Zwischen den zu einander gesteckten Adaptern 3, 3' der Module 1, 1' besteht kein Berührkontakt. Die Signalübertragung erfolgt hier über eine Luftschnittstelle. Die Industriesteckverbinder 5, 5' sind im verbundenen Zustand über eine Dichtung (nicht gezeigt) abgedichtet. So kann kein Staub eindringen und die Luftschnittstelle zusetzen und dadurch die Signalübertragung stören.

Wie bereits oben geschildert, wird der aus der Glasfaser beziehungsweise dem Glasfaserkabel austretende Lichtstrahl aufgeweitet und parallelisiert. Das jeweilige parallele Lichtsignal 13, 13' wird von der Kugellinse 11, 11' des gegenüberliegenden Adapters 3, 3' aufgenommen und auf die Glasfaser des LWL-Steckverbinders 2, 2' projiziert. Die Lichtsignale können anschließend durch einen elektro-optischen Wandler in elektrische Signale umgewandelt werden.

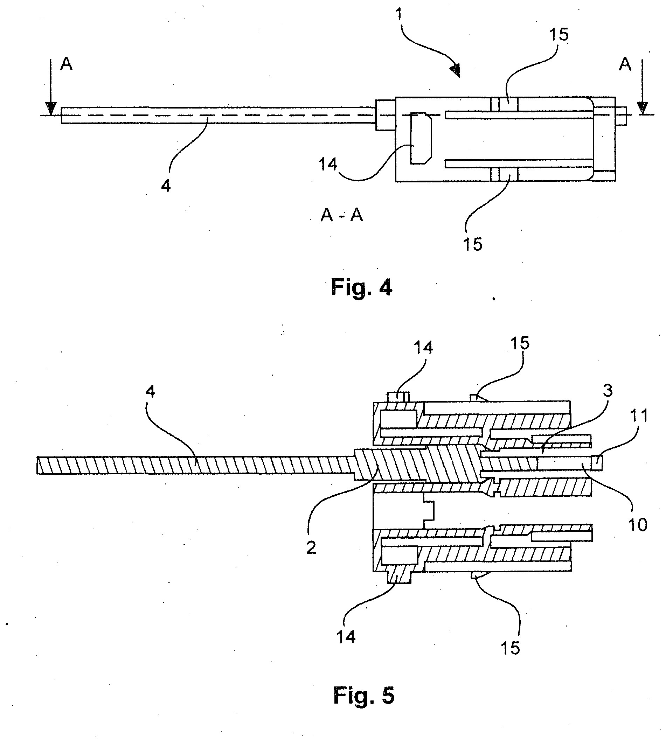

Die Figuren 4 und 5 zeigen eine konkrete Ausführungsform des erfindungsgemäßen Moduls, wobei die Figur 5 die Schnittebene A-A aus Figur 4 zeigt.

Das Modul 1 ist mit Stegen 14 ausgestattet, die in Ausnehmungen eines oben bereits erwähnten Gelenkrahmens für Industriesteckerbinder eingreifen können. Außerdem sind Rasthaken 15 vorgesehen, mit denen sich das Modul direkt in einen Industriesteckverbinder verrasten lässt. Steg 14 und Rasthaken 15 können beim Verrasten und/oder Fixieren auch gleichzeitigt oder umgekehrt benutzt werden, je nachdem wie das Steckverbindergehäuse beziehungsweise der Gelenkrahmen ausgestaltet ist.

Der Kern der Erfindung bezieht sich auf ein Modul 1, welches in ein Gehäuse eines Industriesteckverbinders 5 einsetzbar ist und in welchem zumindest ein LWL-Steckverbinder 2 verrastet ist. Im Modul 1 ist außerdem ein Adapter 3 verrastet, der das vordere Stück der Ferrule 6 des LWL-Steckverbinders 2 umschließt und dadurch mit dem LWL-Steckverbinder 2 wirkverbunden ist. Über eine im Adapter 3 enthaltene Kugellinse 11 wird das Lichtsignal aufgeweitet und parallelisiert und kann dadurch berührungslos auf einen Gegenstecker übertragen werden.

Der Kern der Erfindung bezieht sich auf ein Modul, welches in ein Gehäuse eines Industriesteckverbinders (5) einsetzbar ist, wobei in dem Modul (1) zumindest ein LWL-Steckverbinder (2) einsetzbar ist, wobei in dem Modul (1) zumindest ein Adapter (3) einsetzbar ist, der mit dem LWL-Steckverbinder (2) verbunden ist, wobei der Adapter (3) ein optisch abbildendes Element (11) enthält. Im gesteckten Zustand sind die optischen Elemente (11, 11'), beispielsweise die oben vorgeschlagenen Kugellinsen, zweier Module (1) derart zueinander ausgerichtet, dass das aus dem optischen Element (11) des Moduls des ersten Industriesteckverbinders (5) austretende Lichtsignal in das optische Element (11') des Moduls (1') des zweiten Industriesteckverbinders (5') einkoppelt.

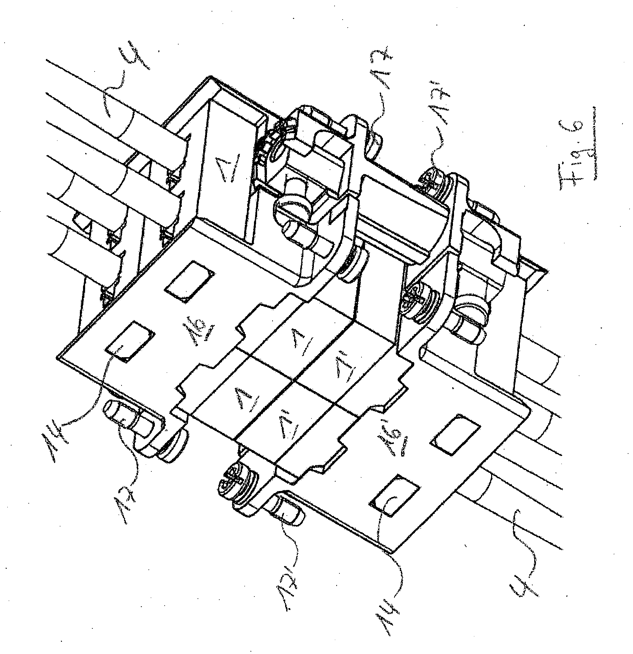

Die Figur 6 zeigt zwei Halterahmen 16, in welchen jeweils zwei optische Module 1 über die Stege 14 reversibel fixiert sind. Die optischen Module 1 sind mit den gegenüberliegenden optischen Modulen 1' zur Signalübertragung gesteckt. Die Halterahmen 16, 16' können über Schrauben 17, 17' in einem Steckverbindergehäuse (nicht gezeigt) fixiert werden.

**Bezugszeichenliste**

| | | | |
|---|---|---|---|
| 1 | Modul | 11. | Kugellinse |
| 2 | LWL-Steckverbinder | 12. | Steckrichtung |
| 3 | Adapter | 13. | Lichtsignal |
| 4 | Glasfaserkabel | 14. | Steg |
| 5 | Industriesteckverbinder | 15. | Rasthaken |
| 6 | Ferrule | 16. | Halterahmen |
| 7 | Rasthaken | 17. | Schraube |
| 8 | Metallhülse | | |
| 9 | Hülsenartiger Bereich | | |
| 10 | Ferrulenstück | | |

## Patentansprüche

1. Industriesteckverbinder aufweisend wenigstens ein Modul, einen Halterahmen (16), der in dem Industriesteckverbinder fixierbar ist,
• wobei das wenigstens eine Modul (1) Fixiermittel (14) aufweist, mit denen es in einem Halterahmen (16) reversibel fixierbar ist, wobei jedes der wenigstens einen Module zwei LWL-Steckverbinder (2) mit jeweils einer Ferrule (6) aufweist,
• aufweist, wobei die LWL-Steckverbinder (2) im Modul (1) reversibel verrastet sind und
• zwei Adapter (3), die in jeweils einem Modul (1) reversibel verrastet sind, wobei jeder Adapter (3) einem LWL-Steckverbinder (2) zugeordnet ist und einen Teil der Ferrule (6) des LWL-Steckverbinders (2) umschließt,
wobei es sich bei den LWL-Steckverbindern (2) um FC- oder LC- oder ST- oder SC-Steckverbinder oder um eine Kombination davon handelt und
die Adapter (3) jeweils ein optisch abbildendes Element (11) in Form einer Kugellinse (11) oder einer Stablinse enthalten, durch die das austretende Lichtsignal (13) aufgeweitet und parallelisiert wird.

2. Industriesteckverbinder nach Anspruch 1
**dadurch gekennzeichnet, dass**
das Modul (1) eine Kupplung umfasst, wobei über die Kupplung die optisch abbildenden Elemente (11) zweier gegenüberliegender Adapter (3) unterschiedlicher Module (1) zueinander ausgerichtet sind.

## Claims

1. Industrial plug-in connector having at least one module, one holding frame (16) which can be fixed in the industrial plug-in connector,
• wherein the at least one module (1) has fixing means (14) with which it can be reversibly fixed in a holding frame (16), wherein each of the at least one modules has two optical fibre plug-in connectors (2) with a ferrule (6) in each case,
• wherein the optical fibre plug-in connectors (2) are reversibly latched in the module (1), and
• two adapters (3) which are reversibly latched in a module (1) in each case, wherein each adapter (3) is associated with an optical fibre plug-in connector (2) and surrounds a portion of the ferrule (6) of the optical fibre plug-in connector (2),
wherein the optical fibre plug-in connectors (2) are FC or LC or ST or SC plug-in connectors or a combination thereof, and
the adapters (3) each contain an optically imaging element (11) in the form of a spherical lens (11) or a rod lens by which the emerging light signal (13) is widened and parallelized.

2. Industrial plug-in connector according to Claim 1, **characterized in that**
the module (1) comprises a coupling, wherein the optically imaging elements (11) of two opposite adapters (3) of different modules (1) are oriented in relation to one another by means of the coupling.

## Revendications

1. Connecteur enfichable industriel, présentant au moins un module, un cadre de retenue (16) qui peut être fixé dans le connecteur enfichable industriel,
- l'au moins un module (1) présentant des moyens de fixation (14) avec lesquels il peut être fixé de manière réversible dans un cadre de retenue (16), chacun des au moins un module présentant deux connecteurs enfichables LWL (2) ayant chacun une ferrule (6),
- les connecteurs enfichables LWL (2) étant encliquetés de manière réversible dans le module (1) et
- deux adaptateurs (3) qui sont encliquetés de manière réversible dans un module respectif (1), chaque adaptateur (3) étant associé à un connecteur enfichable LWL (2) et entourant une partie de la ferrule (6) du connecteur enfichable LWL (2),
les connecteurs enfichables LWL (2) étant des connecteurs enfichables FC ou LC ou ST ou SC ou étant une combinaison de ceux-ci et
les adaptateurs (3) contenant chacun un élément de reproduction optique (11) sous la forme d'une lentille sphérique (11) ou d'une lentille en barreau, par le biais de laquelle le signal lumineux sortant (13) est élargi et parallélisé.

2. Connecteur enfichable industriel selon la revendication 1,
**caractérisé en ce que**
le module (1) comprend un accouplement, les éléments de reproduction optique (11) de deux adaptateurs opposés (3) de modules différents (1) étant orientés l'un vers l'autre par le biais de l'accouplement.
